# EUROPEAN PATENT APPLICATION

(11) **EP 4 672 199 A1**
(43) Date of publication of application: **31.12.2025**
(21) Application number: 25182751.5
(22) Date of filing: 13.06.2025
(51) Int. Cl.: G08G 5/21, G08G 5/22, G08G 5/23, G08G 5/26, G08G 5/53, G08G 5/76

(54) **TURBULENCE DETECTION AND PRESENTATION SYSTEM AND METHOD**

(30) Priority: 27.06.2024 US 202418756939
(71) Applicant: The Boeing Company, Arlington, VA 22202 (US)
(72) Inventor: KEMP, Martin Ian, ARLINGTON, 22202 (US)
(74) Representative: Plasseraud IP

(57) **Abstract**

A method (300) for detecting and presenting turbulence can include obtaining turbulence datapoints (202, 204, 206) indicative of at least locations and turbulence measurements obtained during one or more aircraft flights, identifying increases or decreases between the turbulence measurements in the turbulence datapoints (202, 204, 206), and visually presenting the turbulence datapoints (202, 204, 206) and at least one connection between the turbulence datapoints (202, 204, 206). The turbulence datapoints (202, 204, 206) can be displayed to visually indicate and differentiate between the turbulence measurements, the connections (208) displayed to visually indicate turbulence between the locations of the turbulence measurements.

## Description

### FIELD OF THE DISCLOSURE

Examples of the present disclosure generally relate to systems and methods that detect airflow turbulence that can impact aircraft flight, and that visually present the detected turbulence.

### BACKGROUND OF THE DISCLOSURE

Airflow turbulence includes changes in airflow around an aircraft during flight. These changes in the airflow can interfere with flight of the aircraft, such as by causing flight of the aircraft to bump. Severe turbulence can damage the aircraft and even injure passengers onboard the aircraft.

In some known systems, aircraft have onboard sensors that measure airflow turbulence. The location of the measured turbulence, as well as the severity of the turbulence, can be measured during flight of aircraft. The location, measured turbulence severity, as well as the time at which the turbulence severity was measured, may be recorded by aircraft sensor(s) and downloaded or downlinked to a location off-board the aircraft. Several aircraft may report turbulence in this way so that the off-board location (e.g., one or more servers) can aggregate many measured turbulences (or the lack of turbulence), along with the associated locations and measurement times.

This aggregated information can be communicated to devices onboard aircraft to inform pilots of the turbulence information (e.g., severity, location, and measurement time). For example, the information can be communicated to electronic flight bags (EFBs) and presented to the pilots. The pilots can then control the aircraft and optionally modify flight plans or paths based on the aggregated turbulence information.

But the turbulence information is presented to pilots as a sparse set of data points reported from multiple flights and grouped by each flight. The data points can include the location (including altitude) where the turbulence was measured, as well as the measurement time and intensity of the measured turbulence. When the measured turbulence severity is low or nonexistent, then the turbulence is measured (and reported) less frequently. This causes the data points to be distributed far from each other. When turbulence is experienced, then the measurements are made and reported more frequently. This makes the data points to be more closely spaced.

Pilots work to fly aircraft through clear, calm air, but some currently known systems display a sparse set of data as spaced apart data points with large gaps between the data points associated with calm conditions. It can be difficult to visually assess or distinguish between where aircraft have flown and not experienced turbulence, versus where aircraft have not flown. For example, a first flight may travel over a first path and have several locations where turbulence measurements were made. Two of these locations may have measured no turbulence, and the datapoints associated with these locations may be spaced apart on the display shown to pilots. A second flight may travel on a path that crosses the path of the first flight, and also may have spaced apart datapoints showing no turbulence. Even though these two flights passed through the same location at different times, no indication is displayed to other pilots to show that no turbulence was experienced at that location. The lack of any information regarding turbulence (or the lack of turbulence) at that location is due to the fact that no turbulence was detected between the two datapoints on either side of the location for each of the first and second flights.

As a result, pilots may not be fully informed of the turbulence (or lack thereof) in various locations between the sparse datapoints that are shown to the pilots.

### SUMMARY OF THE DISCLOSURE

A method for detecting and presenting turbulence can include obtaining turbulence datapoints indicative of at least locations and turbulence measurements obtained during one or more aircraft flights, identifying increases or decreases between the turbulence measurements in the turbulence datapoints, and visually presenting the turbulence datapoints and at least one connection between the turbulence datapoints. The turbulence datapoints can be displayed to visually indicate and differentiate between the turbulence measurements, the connections displayed to visually indicate turbulence between the locations of the turbulence measurements.

A turbulence detection and presentation system can include a control unit that obtains turbulence datapoints indicative of at least locations and turbulence measurements obtained during one or more aircraft flights. The control unit can identify increases or decreases between the turbulence measurements in the turbulence datapoints, and can direct an output device to present the turbulence datapoints and at least one connection between the turbulence datapoints, the turbulence datapoints displayed to visually indicate and differentiate between the turbulence measurements. The connections can be displayed to visually indicate turbulence between the locations of the turbulence measurements.

Another method for detecting and presenting turbulence can include obtaining sparsely located datapoints each representing a turbulence measurement, a location of the turbulence measurement, and a time at which the turbulence measurement was measured; identifying increases or decreases between the turbulence measurements in pairs of the datapoints; determining turbulence in airspace between the turbulence measurements in each of the pairs of the datapoints; and visually presenting connections between the datapoints in each of the pairs. The connections can represent the turbulence in the airspace between the turbulence measurements in each of the pairs of the datapoints.

### BRIEF DESCRIPTION OF THE DRAWINGS

Figure 1 illustrates one example of a turbulence detection and presentation system.
Figure 2 illustrates one example of a display that can be presented on an output device shown in Figure 1 by a control unit shown in Figure 1.
Figure 3 illustrates a flowchart of one example of a method for detecting and presenting turbulence.
Figure 4 illustrates a perspective front view of an aircraft according to one example.

### DETAILED DESCRIPTION OF THE DISCLOSURE

The foregoing summary, as well as the following detailed description of certain examples will be better understood when read in conjunction with the appended drawings. As used herein, an element or step recited in the singular and preceded by the word "a" or "an" should be understood as not necessarily excluding the plural of the elements or steps. Further, references to "one example" are not intended to be interpreted as excluding the existence of additional examples that also incorporate the recited features. Moreover, unless explicitly stated to the contrary, examples "comprising" or "having" an element or a plurality of elements having a particular condition can include additional elements not having that condition.

Examples of a turbulence detection and presentation system (and associated method) are described herein. The system and method can obtain turbulence information datapoints containing the measured severity of turbulence (or the lack of turbulence), the location (including altitude) of where the measurement for turbulence was made (even if no turbulence was measured), and the time of the measurement. The system and method can direct an output device, such as an electronic display, to show these datapoints on a map along with connecting lines between the datapoints. These lines may be displayed in different ways to indicate the turbulence. For example, a line may be drawn between consecutive datapoints (consecutively measured by an aircraft during a flight of that aircraft) where little to no turbulence was measured. This line can represent the time between the sporadic measurements where little to no turbulence was measured (e.g., the measured turbulence was less than a threshold amount), but the turbulence was not measured or reported.

The lines may be drawn between two datapoints along the route of the flight in which the information in the datapoints were measured. The first datapoint connected by a line may be the older of the two datapoints connected by the line. The second datapoint connected by the line may be the next measurement of turbulence. The lines may be drawn sufficiently wide or thick to visually represent a corridor of non-turbulence and avoid confusion with navigation airways also displayed under the corridors on the output device.

The combination of several lines connecting different pairs of datapoints in each flight can assist with filling the visual gaps between turbulence measurements. A pilot or other use can interrogate a line (e.g., by selecting the line on the output device) to view additional details of the reading(s) associated with the points connected by the line.

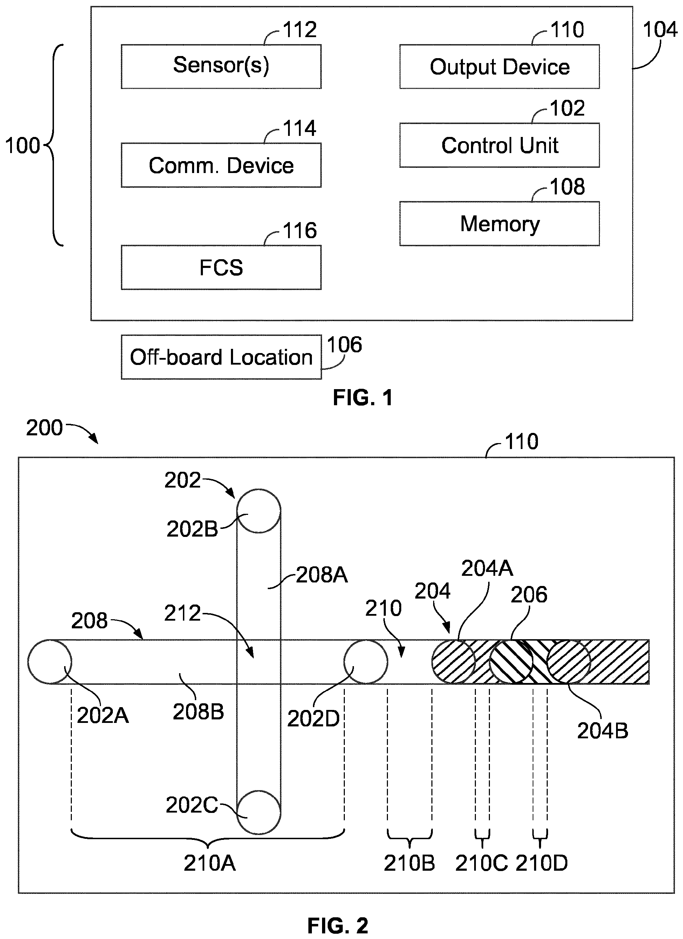

Figure 1 illustrates one example of a turbulence detection and presentation system 100. The system 100 can include a control unit 102 onboard an aircraft 104. The control unit 102 can represent hardware circuitry that includes and/or is connected with one or more processors (e.g., microprocessors, integrated circuits, field programmable gate arrays, controllers, etc.) that perform operations described herein. The control unit 102 may operate according to sets of instructions (e.g., software) to perform the operations described herein. The sets of instructions may be created from, based on, or represent the method(s) described herein.

The control unit 102 can receive turbulence information from an off-board device 106. This off-board device 106 also can represent hardware circuitry that includes and/or is connected with one or more processors that perform operations described herein. The off-board device 106 can aggregate turbulence information from many different flights by many different aircraft. For example, the off-board device 106 can receive locations where turbulence measurements were made, the severities of the turbulence were measured, and times when the measurements were made from many different flights. The off-board device 106 can communicate this turbulence information to the control unit 102 onboard the aircraft 104 (e.g., via wired and/or wireless connections, prior to or during the flight of the aircraft 104). The information can be stored in a tangible and non-transitory computer-readable memory 108, such as a computer hard drive, server, or the like, that is accessible by the control unit 102.

The aircraft 104 may include one or more sensors 112 onboard the aircraft 104 that measure turbulence. The sensor(s) 112 can measure the turbulence on a periodic basis if no change in turbulence is detected. For example, the sensor(s) 112 can measure that there is little to no turbulence at a first time and at a first location. This information can be recorded by the sensor(s) 112 (e.g., in the memory 108) and/or communicated to the off-board location 106 via a communication device 114, such as a wireless antenna, modem, etc. The sensor(s) 112 may not measure and record the turbulence again until a time delay from the previous measurement is reached or a change in turbulence occurs. For example, if the turbulence does not change, then the sensor(s) 112 may not measure and record the turbulence again until a time delay (e.g., several minutes, such as five minutes) following the previous measurement and recording is reached. The sensor(s) 112 may repeatedly or continuously measure turbulence, but only record the turbulence in the memory 108 once a change is detected or time delay is reached. If the sensor(s) 112 do sense an increase or decrease in turbulence, then the sensor(s) 112 can measure and record the turbulence in response to that increase or decrease. As a result, the frequency or rate at which the turbulence measurements are recorded can be related or based on how often the turbulence changes. More frequent changes in turbulence result in the turbulence measurements being recorded more often. Less frequent changes in turbulence result in the turbulence measurements being recorded less often.

The control unit 102 can examine the received turbulence information and identify pairs of datapoints. Each datapoint can include the measured severity of turbulence, the location where the measurement was made, and the time of the measurement. The datapoints may be grouped by flights. For example, a first set of datapoints may be the turbulence information measured by a first aircraft during a flight of that aircraft, a second set of datapoints may be the turbulence information measured by a second aircraft during a flight of that aircraft, a third set of datapoints may be the turbulence information measured by a third aircraft during a flight of that aircraft, and so on.

The control unit 102 can direct an output device 110 onboard the aircraft 104 to visually present the turbulence information. This output device 110 can be an electronic display, such as an EFB. The output device 110 optionally can receive input, such as via a touchscreen or other input device. The control unit 102 can direct the output device 110 to display the datapoints associated with the different turbulence information, along with lines interconnecting sequential pairs of the datapoints measured in the same flight, in a manner that communicates paths and the turbulence along the paths.

A flight control system 116 ("FCS" in Figure 1) can represent hardware circuitry that includes and/or is connected with one or more processors, which may be one or more of the same or different processors than the other processors described herein. The FCS 116 can control the aircraft 104 during flight. The FCS 116 can manipulate control surfaces (e.g., elevators, ailerons, rudder, etc.) to maintain stability, adjust attitude, and execute pilot inputs. The FCS 116 may include an autopilot system that automatically controls the aircraft to maintain a desired or designated flight path (without operator or pilot intervention). For example, the FCS 116 can represent or include an automatic flight control system (AFCS).

Figure 2 illustrates one example of a display 200 that can be presented on the output device 110 by the control unit 102. Several datapoints 202 (e.g., 202A-D, 204 (e.g., 204A, 204B), 206 are shown in the display 200. Each of these datapoints 202, 204, 206 represents turbulence information at different locations and/or times for a flight of an aircraft. For example, the datapoints 202A, 202D, 204A, 206, and 204B may represent turbulence measurements sequentially obtained in that order at different locations and different times during a flight of one aircraft, while the datapoints 202B and 202C may represent turbulence measurements obtained in that order at different locations and different times during another flight of another aircraft (or the same aircraft).

The control unit 102 can direct the output device 110 to present the datapoints 202, 204, 206 differently to indicate different severities of turbulence measured at the locations and times associated with the datapoints 202, 204, 206. The control unit 102 can direct the output device 110 to display the datapoints 202A-D using a first color, the datapoints 204A, 204B using a different, second color, and the datapoint 206 using a different, third color. For example, the datapoints 202A-D may be displayed in a gray color to indicate low or no turbulence measured at the locations and times associated with the datapoints 202A-D, the datapoints 204A, 204B may be displayed in a yellow color to indicate moderate turbulence measured at the locations and times associated with the datapoints 204A, 204B, and the datapoint 206 may be displayed in an orange or red color to indicate severe turbulence measured at the location and time associated with the datapoint 206. Optionally, different colors may be used.

While the datapoints 202, 204, 206 are shown as circles, another symbol or shape may be used. The control unit 102 can direct the output device 110 to display different symbols for different measured turbulences. For example, a first symbol (e.g., a circle) may be used to represent a datapoint associated with little to no turbulence, a different, second symbol (e.g., a square) may be used to represent a datapoint associated with moderate turbulence, and a different, third symbol (e.g., a triangle) may be used to represent a datapoint associated with severe turbulence. This can ensure that different colors are not confused with the same turbulence severity.

The different types or categories of turbulence can be associated with different thresholds. For example, little to no turbulence is associated with a measured turbulence (e.g., an Eddy dissipation rate, kinetic energy, etc.) that is less than a first threshold, moderate turbulence may be associated with a measured turbulence that is at least as great as the first threshold but less than a larger, second threshold, severe turbulence may be associated with a measured turbulence that is at least as large as the second threshold. Additional thresholds may be used to further refine different levels or amounts of turbulence.

The control unit 102 can direct the output device 110 to display connections 208 (e.g., connections 208A, 208B) between the datapoints 202, 204, 206. The connections 208 may be lines that connect the datapoints 202, 204, 206 associated with the same flight of an aircraft. For example, different sets or subsets of the datapoints 202B, 202C may represent turbulence measurements obtained by one or more sensors 112 onboard different aircraft during different flights that extended over or through the locations associated with the datapoints 202B, 202C. Therefore, the connection 208A is displayed to connect these datapoints 202B, 202C. Similarly, the datapoints 202A, 202D, 204A, 206, 204B may represent turbulence measurements obtained by sensors onboard one aircraft during another flight that extended over or through the locations associated with the datapoints 202A, 202D, 204A, 206, 204B. Therefore, the connection 208B is displayed to connect these datapoints 202A, 202D, 204A, 206, 204B.

The connections 208 may be displayed in a way that visually communicates the turbulence along a corridor extending between the datapoints 202, 204, 206 connected by a connection 208. For example, the connection 208A may be displayed in a color that indicates the turbulence in the airspace extending from the location of the datapoint 202B to the datapoint 202C. This color may match the color used to represent the datapoint 202B (e.g., gray or another color). In the illustrated example, because the turbulence did not change (e.g., or did not change by more than a threshold amount), the measurement of the datapoint 202C was recorded only after expiration of a time delay following the time at which the prior measurement of datapoint 202B was recorded. The datapoints 202B, 202C and the entirety of the connection 208A extending from the datapoint 202B to the datapoint 202C may be presented in the same color as the datapoints 202B, 202C.

The connection 208B between the datapoints 202A, 202D, 204A, 206, 204B may have different segments 210 (e.g., segments 210A, 210B, 210C, 210D, 210E) that visually represent the turbulence between the datapoints 202, 204, 206 on opposite ends of the segments 210. For example, the flight in which the turbulence measurements of the datapoints 202A, 202D, 204A, 206, 204B were recorded may have recorded the turbulences in that order (e.g., the measurement for datapoint 202A was measured and recorded before the others, the measurement for datapoint 202D was measured and recorded after the measurement of datapoint 202A but before the other datapoints, and so on). While the connection 208A may be a single segment due to the turbulence not changing (or not significantly changing by more than a threshold) between the locations and times of the datapoints 202B, 202C, the connection 208B has multiple segments 210 because the measured turbulences changed between the datapoints 202D and 204A, between the datapoints 204A and 206, and between the datapoints 206 and 204B.

For example, little to no turbulence may have been measured at datapoints 202A, 202D. The segment 210A may connect these datapoints 202A, 202D and may be presented in the same color as the datapoint 202A. This can visually indicate to a pilot that the turbulence does not change in an airborne corridor extending from the location of the datapoint 202A and the datapoint 202D.

The segment 210B can connect the datapoints 202D, 204A and be displayed in a similar or same manner (e.g., same color) as the datapoint 202D. The segment 210B can be presented in the same way as the datapoint 202D because the turbulence was not found to change or change significantly until the aircraft reached the next datapoint 204A.

In some examples, each segment 210 within the connection 208 can be visually presented to represent the turbulence measurement in the pair of datapoints 202, 204, 206 that was measured earlier in time. For example, each segment 210 within the connection 208 can be visually presented in the same color as the turbulence measurement in the pair of datapoints 202, 204, 206 that was measured earlier in time. For example, if the earlier turbulence measurement in the pair indicates low turbulence, the corresponding segment 210 can be displayed in a first color, such as gray, to visually represent calm airspace. Similarly, if the earlier turbulence measurement indicates moderate turbulence, the segment 210 can be displayed in a second color, such as yellow, and if the earlier turbulence measurement indicates severe turbulence, the segment 210 can be displayed in a third color, such as red. This color-coding ensures that the turbulence conditions in the airspace between datapoints 202, 204, 206 are visually represented in a manner consistent with the earlier measurement, allowing pilots to quickly interpret the severity of turbulence along the flight path.

The datapoint 204A may be associated with an increased turbulence relative to the turbulences measured for the datapoints 202A, 202D. Therefore, the datapoint 204A can be displayed in a different manner (e.g., different color, such as yellow). The segment 210C can connect the datapoints 204A, 206 and be displayed in a similar or same manner as the datapoint 204A. The segment 210C can be presented in the same way as the datapoint 204A because the turbulence was not found to change or change significantly until the aircraft reached the next datapoint 206.

The datapoint 206 may be associated with an increased turbulence relative to the turbulences measured for the datapoints 202A, 202D, 204A. Therefore, the datapoint 206 can be displayed in a different manner (e.g., different color, such as orange or red). The segment 210D can connect the datapoints 206, 204B and be displayed in a similar or same manner as the datapoint 206. The segment 210D can be presented in the same way as the datapoint 206 because the turbulence was not found to change or change significantly until the aircraft reached the next datapoint 204B.

The datapoint 204B may be associated with a decreased turbulence relative to the turbulences measured for the datapoint 204A, but greater than the datapoints 202A, 202D, and may be equal or nearly equal to the turbulence of datapoint 204A. For example, the turbulences measured for datapoints 204A, 204B may be between a lower threshold associated with the datapoints 202A-D and an upper threshold associated with the datapoint 206. Therefore, the datapoint 204B can be displayed in a similar manner as the datapoint 204A (e.g., in yellow color). The segment 210E can be connected with the datapoint 204B and may extend toward another datapoint or to a termination of the flight. This segment 210E can be displayed in a similar or same manner as the datapoint 204A. The segment 210E can be presented in the same way as the datapoint 204B because the turbulence was not found to change or change significantly after the aircraft passed the datapoint 204B.

The connections 208 and/or segments 210 may be selected (e.g., using an input device or a touch on the display of the output device 110) to reveal information about the turbulence measurements. Responsive to a connection 208 or segment 210 being selected, the control unit 102 can direct the display device 110 to present the measured turbulence, the time at which the turbulence was measured (optionally the age of the turbulence measurement), and/or the location where the turbulence was measured.

The connections 208 and/or segments 210 may be presented with a thickness that is larger than a two dimensional line, such as a line indicating the flight path of the aircraft 104 on which the pilot is viewing the display 200. This can avoid or reduce confusion between the turbulence corridors represented by the connections 208 and segments 210 and navigation airways displayed beneath or on top of the connections 208 and/or segments 210. The datapoints 202, 204, 206 can be representative of distinct locations in airspace (e.g., defined by a longitude, latitude, and altitude). Alternatively, a datapoint 202, 204, 206 may represent a three-dimensional volume in airspace. This volume may be defined as the space encompassed by a fixed distance from the longitude, latitude, and altitude where the turbulence or no turbulence was measured (such as ten meters, twenty meters, fifty meters, or the like, in different embodiments or examples).

The connections 208 and connection segments 210 can represent corridors (e.g., three-dimensional volumes) that extend between the datapoints 202, 204, 206 as described herein. These corridors may be defined by a fixed distance extending entirely around a line extending from the longitude, latitude, and altitude of the two datapoints 202, 204, 206 on opposite ends of the connection 208 or segment 210. This fixed distance may be the same fixed distance described above in one example. Alternatively, this may be a larger or smaller fixed distance.

Optionally, the display of the connections 208 and/or segments 210 may change based on the age of the turbulence measurements. For example, the translucency of the connections 208 and/or segments 210 may increase in proportion to the age of the turbulence measurement indicated by the connection 208 or segment 210. A connection 208 or segment 210 representing an older turbulence measurement (from the older of the two datapoints 202, 204, 206 connected by the connection 208 or segment 210) may be lighter or more translucent than another connection 208 or segment 210 representing a newer turbulence measurement.

This can allow pilots or other operators to quickly identify which turbulence measurements represented by different and/or intersecting connections 208 or segments 210 are the more recent turbulence measurements. For example, if a flight path extends through an intersection 212 between two connections 208 or segments 210 that have different appearances (e.g., different colors), then the pilot or operator can quickly determine that the turbulence associated with the more opaque or less translucent connection 208 or segment 210 in the intersection 212 is the more current (and likely more accurate) turbulence measurement.

Optionally, only the connection 208 or segment 210 that represents the more recently measured turbulence in an intersection 212 is shown and the other connection 208 or segment 210 is not shown in the intersection 212. For example, in Figure 2, if the connection 208A represents a more recent turbulence measurement from the datapoint 202B than the segment 210A (which represents an older turbulence measurement from the datapoint 202A), then only the connection 208A may be shown in the intersection 212 and the segment 210A may not be shown in the intersection 212. This can avoid different translucencies of the connections 208 and/or segments 210 from being impacted by intersections 212 between the connections 208 and/or segments 210.

The system 100 can provide a more complete display of calm air by filling the gaps between datapoints 202, 204, 206 with connections 208 and/or segments 210 that indicate different measured values of turbulence. The connections 208 and/or segments 210 can allow pilots or other operators to quickly identify corridors for travel, along with values of turbulence in these corridors, instead of only being provided with sparce locations of individual measurements of turbulence.

The control unit 102 may implement one or more responsive actions based on the datapoints 202, 204, 206 that are identified, the connections 208 between the datapoints 202, 204, 206 (and that represent a corridor for a flightpath of an aircraft 104 that passed through the datapoints 202, 204, 206 connected by a connection 208), and/or the segments 210 of one or more connections 208. As one example, the control unit 102 may generate an audible and/or visual alert on the output device 110. This alert can warn pilots of the aircraft 104 heading toward a datapoint 202, 204, 206, connection 208, and/or connection segment 210 associated with large turbulence (e.g., turbulence that exceeds a threshold value). The pilots can then change the flight path of the aircraft 104 to avoid the locations or corridors associated with large turbulence and increase the safety of the flight.

As another example, the control unit 102 can direct the FCS 116 (shown in Figure 1) to automatically control flight of the aircraft 104 responsive to identifying one or more of the datapoints 202, 204, 206, connections 208, and/or segments 210. For example, the control unit 102 can direct the FCS 116 to automatically control the aircraft 104 to fly and avoid datapoints 202, 204, 206, connections 208, and/or segments 210. For example, the control unit 102 is configured to automatically change a flight path of the aircraft 104 to avoid turbulence between two or more of the turbulence datapoints 202, 204, 206. For example, when the control unit 102 detects a connection 208 or segment 210 associated with turbulence exceeding a predefined threshold, such as moderate or severe turbulence, it can calculate an alternative flight path that bypasses the affected airspace. The control unit 102 can then communicate this alternative flight path to the FCS 116 (and, for example, Flight Management System - FMS), which can automatically implement the adjustment by modifying the aircraft's altitude, heading, or speed. Additionally, the control unit 102 can continuously monitor updated turbulence data during the flight and dynamically adjust the flight path as new turbulence conditions are detected. This also can increase the safety of the flight. As yet another example, the control unit 102 can cooperate with a Flight Management System (FMS) of the aircraft 104 to provide pilots with alternative flight paths. Upon identifying one or more datapoints 202, 204, 206, connections 208, and/or segments 210 associated with turbulence exceeding a predefined threshold, the control unit 102 can calculate multiple potential flight paths that minimize exposure to turbulence. These alternative flight paths can be displayed on the output device 110, such as an electronic flight bag (EFB) or a cockpit navigation display (ND), alongside the current planned flight path. Each alternative flight path can be visually represented with corresponding turbulence information, such as color-coded segments or connections, to indicate the severity of turbulence along the route. The pilot can then select the most suitable flight path based on operational considerations, such as fuel efficiency, time constraints, or passenger comfort. Once a flight path is selected, the control unit 102 can communicate the updated route to the FMS and FCS, which can adjust the aircraft's navigation systems accordingly and to automatically control flight of the aircraft 104.

As another example, the control unit 102 can generate one or more alerts to warn passengers of the aircraft 104 approaching or passing through a datapoint 202, 204, 206, connection 208, and/or segment 210 associated with increased turbulence (e.g., turbulence above a designated threshold). The thresholds described herein may be different thresholds, or two or more of the thresholds may be the same threshold. The control unit 102 can activate warning lamps above passenger seats and/or direct speakers to generate an audible sound that instructs the passengers to return to the passenger seats and fasten safety belts. This can increase the safety of passengers during flight through turbulence when compared to not generating these warnings.

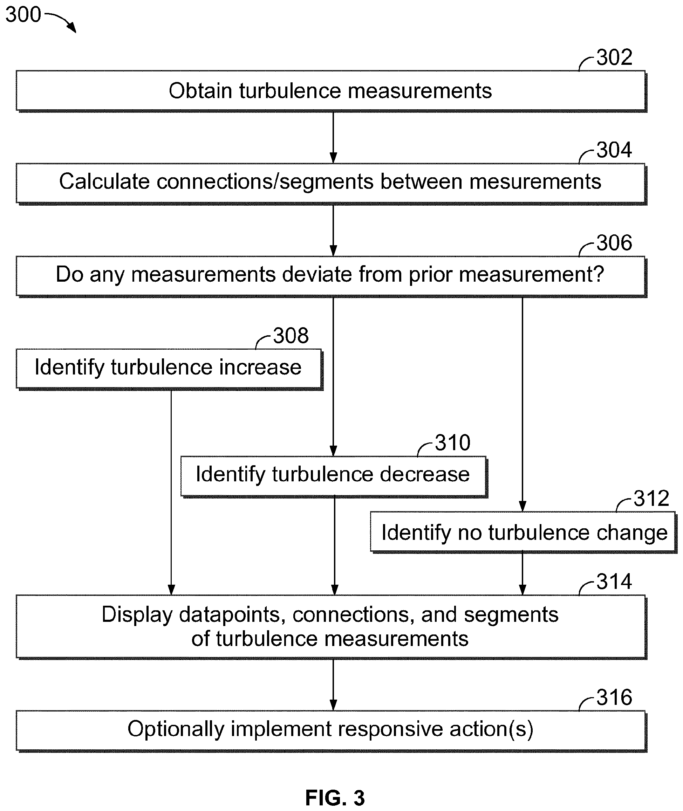

Figure 3 illustrates a flowchart of one example of a method 300 for identifying turbulence measurements between sparse datapoints. The method 300 can represent operations performed by the control unit 102 and/or the output device 110 shown in Figure 1 to detect and notify pilots or others of turbulence during flight. At 302, turbulence measurements are obtained by the control unit 102. For example, by obtaining turbulence datapoints 202, 204, 206 indicative of at least locations and turbulence measurements obtained during one or more aircraft flights. These measurements can include the locations, times at which the measurements were made, and the turbulence during previous or concurrent flights of other aircraft. For example, some measurements may be from previously completed flights while other measurements can be from flights that are currently ongoing. The measurements may be reported to the off-board location 106 and from the off-board location 106 to the control unit 102. This off-board location 106 can represent, for example, a computer, server, or the like, of the International Air Transport Association (IATA) or another entity.

At 304, connections 208 between the locations of the measurements received at 302 are calculated or identified. The control unit 102 may calculate one or more of these connections 208 may be straight lines (e.g., shortest paths) from a first turbulence measurement location of a flight to a last turbulence measurement location of that flight. Alternatively, one or more of the connections 208 may not be only a straight line, but may follow the flight path of the flight.

At 306, a decision is made as to whether any of the turbulence measurements along a connection 208 deviates from a prior turbulence measurement along the same connection 208. For example, by identifying increases or decreases between the turbulence measurements in the turbulence datapoints 202, 204, 206. For example, the control unit 102 can compare consecutively obtained turbulence measurements to determine whether the subsequent turbulence measurement was greater than, less than, or substantially equal to the immediately prior turbulence measurement. If the subsequent measurement is greater than the prior measurement (e.g., by a least a first threshold amount), then the control unit 102 can decide that the turbulence along the connection 208 increased. As a result, flow of the method 300 can proceed toward 308. If the subsequent measurement is less than the prior measurement (e.g., by a least the first threshold amount or by at least a different, second threshold amount), then the control unit 102 can decide that the turbulence along the connection 208 decreased. As a result, flow of the method 300 can proceed toward 310. If the subsequent measurement is substantially the same as the prior measurement (e.g., the subsequent and prior measurements are within a threshold range of each other, such as the measurements do not differ by more than the first threshold or the second threshold), then the control unit 102 can decide that the turbulence along the connection 208 has not changed. As a result, flow of the method 300 can proceed toward 312.

At 308, the subsequent measurement of the increasing turbulence is identified as an increasing turbulence datapoint. At 310, the subsequent measurement of the increasing turbulence is identified as a decreasing turbulence datapoint. At 312, the subsequent measurement is identified as an unchanging turbulence datapoint. Flow of the method 300 can proceed from each of 308, 310, and 312 toward 314.

At 314, a display is generated onboard the aircraft 104 to notify pilots of the turbulence measurements, the locations of the measurements, and the corridors extending between these measurement locations. For example, by visually presenting the turbulence datapoints 202, 204, 206 and at least one connection 208 between the turbulence datapoints 202, 204, 206, where the turbulence datapoints 202, 204, 206 are displayed to visually indicate and differentiate between the turbulence measurements, and the connections 208 are displayed to visually indicate turbulence between the locations of the turbulence measurements. As described above, the control unit 102 can direct the output device 110 to generate a display that shows datapoints 202, 204, 206, connections 208, and segments 210 so that the pilots can more easily visualize the turbulence between the sparse locations of turbulence measurements. This can provide more information to the pilot(s) and allow the pilot(s) to control the aircraft to avoid turbulence and/or to notify passengers onboard the aircraft and thereby increase the safety of the flight.

At 316, the method 300 optionally can include implementing one or more responsive actions. These actions may include generating an alert to pilots and/or passengers, automatically controlling the aircraft 104, and the like, as described above.

Following the method 300 described above, in some examples, the control unit 102 is configured to determine turbulence in the airspace between turbulence measurements by analyzing pairs of turbulence datapoints 202, 204, 206. For each pair of datapoints, the control unit 102 identifies the turbulence measurements at the respective locations and interpolates the turbulence conditions in the airspace between them. For example, if two consecutive datapoints indicate low turbulence, the control unit 102 determines that the airspace between these datapoints is also associated with low turbulence. Conversely, if the datapoints indicate a change in turbulence severity, the control unit 102 determines that the airspace between these datapoints is associated with a gradient of turbulence conditions. The control unit 102 then visually presents connections 208 between the datapoints 202, 204, 206, with each connection representing the turbulence in the airspace between the datapoints. These connections 208 can be displayed on the output device 110 using color-coding, line styles, or other visual indicators to communicate the turbulence conditions along the flight path. This determination and visualization of turbulence between datapoints provide pilots with a more complete understanding of turbulence conditions, enabling safer and more efficient flight operations.

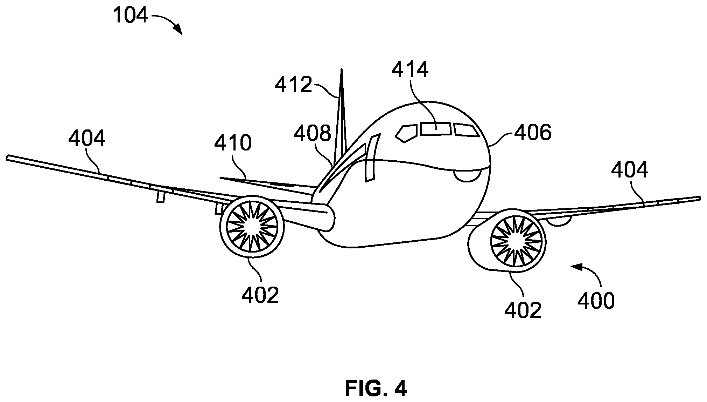

Figure 4 illustrates a perspective front view of the aircraft 104 according to one example. The aircraft 104 includes a propulsion system 400 that includes engines 402, for example. Optionally, the propulsion system 400 may include more engines 402 than shown. The engines 402 are carried by wings 404 of the aircraft 104. In other examples, the engines 402 may be carried by a fuselage 406 and/or an empennage 408. The empennage 408 may also support horizontal stabilizers 410 and a vertical stabilizer 412. The fuselage 406 of the aircraft 104 defines an internal cabin 414, which includes a flight deck or cockpit, one or more work sections (for example, galleys, personnel carry-on baggage areas, and the like), one or more passenger sections (for example, first class, business class, and coach sections), one or more lavatories, and/or the like. The aircraft 104 can be sized, shaped, and configured differently than shown in Figure 4. The pilot or other operators described herein may be onboard the aircraft or may be off-board the aircraft and remotely monitoring and/or controlling the aircraft.

Further, the disclosure comprises examples according to the following clauses:
Clause 1: A method comprising: obtaining turbulence datapoints indicative of at least locations and turbulence measurements obtained during one or more aircraft flights; identifying increases or decreases between the turbulence measurements in the turbulence datapoints; and visually presenting the turbulence datapoints and at least one connection between the turbulence datapoints, the turbulence datapoints displayed to visually indicate and differentiate between the turbulence measurements, the connections displayed to visually indicate turbulence between the locations of the turbulence measurements.
Clause 2: The method of Clause 1, wherein the one or more aircraft flights includes multiple aircraft flights, and multiple sets of the turbulence datapoints are obtained with each of the sets associated with a different one of the aircraft flights.
Clause 3: The method of Clauses 1-2, wherein the at least one connection is visually presented as connecting a first measured of the turbulence measurements during a first aircraft flight of the one or more aircraft flights and a last measured of the turbulence measurements during the first aircraft flight.
Clause 4: The method of Clauses 1-3, further comprising: visually displaying one or more segments within the at least one connection, each of the one or more segments visually connecting a pair of the turbulence measurements within the at least one connection.
Clause 5: The method of Clause 4, wherein each of the one or more segments is visually presented to represent the turbulence measurement in the pair that was measured before the turbulence measurement in the pair that was measured later.
Clause 6: The method of Clause 5, wherein each of the one or more segments is visually presented in a same color as the turbulence measurement in the pair that was measured before the turbulence measurement in the pair that was measured later to visually indicate turbulence in airspace between the turbulence measurements in the pair.
Clause 7: The method of Clauses 1-6, wherein the at least one connection is presented in one or more colors to visually represent turbulence in airspace between the turbulence datapoints.
Clause 8: The method of Clauses 1-7, wherein the turbulence datapoints are visually presented as sparse representations of the turbulence measurements and the at least one connection is visually presented to represent turbulence in airspace between the sparse representations.
Clause 9: The method of Clauses 1-8, further comprising: automatically changing a flight path of an aircraft to avoid turbulence between two or more of the turbulence datapoints.
Clause 10: A turbulence detection and presentation system comprising: a control unit configured to obtain turbulence datapoints indicative of at least locations and turbulence measurements obtained during one or more aircraft flights, the control unit configured to identify increases or decreases between the turbulence measurements in the turbulence datapoints, the control unit configured to direct an output device to present the turbulence datapoints and at least one connection between the turbulence datapoints, the turbulence datapoints displayed to visually indicate and differentiate between the turbulence measurements, the connections displayed to visually indicate turbulence between the locations of the turbulence measurements.
Clause 11: The turbulence detection and presentation system of Clause 10, wherein the one or more aircraft flights includes multiple aircraft flights, and the control unit is configured to obtain multiple sets of the turbulence datapoints with each of the sets associated with a different one of the aircraft flights.
Clause 12: The turbulence detection and presentation system of Clauses 10-11, wherein the control unit is configured to direct the output device to visually present the at least one connection as connecting a first measured of the turbulence measurements during a first aircraft flight of the one or more aircraft flights and a last measured of the turbulence measurements during the first aircraft flight.
Clause 13: The turbulence detection and presentation system of Clauses 10-12, wherein the control unit is configured to direct the output device to visually display one or more segments within the at least one connection, each of the one or more segments visually connecting a pair of the turbulence measurements within the at least one connection.
Clause 14: The turbulence detection and presentation system of Clause 13, wherein the control unit is configured to direct the output device to visually present each of the one or more segments to represent the turbulence measurement in the pair that was measured before the turbulence measurement in the pair that was measured later.
Clause 15: The turbulence detection and presentation system of Clause 14, wherein the control unit is configured to direct the output device to visually present each of the one or more segments in a same color as the turbulence measurement in the pair that was measured before the turbulence measurement in the pair that was measured later to visually indicate turbulence in airspace between the turbulence measurements in the pair.
Clause 16: The turbulence detection and presentation system of Clauses 10-15, wherein the control unit is configured to direct the output device to visually present the at least one connection in one or more colors to visually represent turbulence in airspace between the turbulence datapoints.
Clause 17: The turbulence detection and presentation system of Clauses 10-16, wherein the control unit is configured to direct the output device to visually present the turbulence datapoints as sparse representations of the turbulence measurements and the at least one connection to represent turbulence in airspace between the sparse representations.
Clause 18: The turbulence detection and presentation system of Clauses 10-17, wherein the control unit is configured to direct a flight control system to automatically change a flight path of an aircraft to avoid turbulence between two or more of the turbulence datapoints.
Clause 19: A method comprising: obtaining sparsely located datapoints each representing a turbulence measurement, a location of the turbulence measurement, and a time at which the turbulence measurement was measured; identifying increases or decreases between the turbulence measurements in pairs of the datapoints; determining turbulence in airspace between the turbulence measurements in each of the pairs of the datapoints; and visually presenting connections between the datapoints in each of the pairs, the connections representing the turbulence in the airspace between the turbulence measurements in each of the pairs of the datapoints.
Clause 20: The method of Clause 19, further comprising: automatically controlling flight of an aircraft based on the turbulence in the airspace between the turbulence measurements in each of the pairs of the datapoints.

While various spatial and directional terms, such as top, bottom, lower, mid, lateral, horizontal, vertical, front and the like can be used to describe examples of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described examples (and/or aspects thereof) can be used in combination with each other. In addition, many modifications can be made to adapt a particular situation or material to the teachings of the various examples of the disclosure without departing from their scope. While the dimensions and types of materials described herein are intended to define the aspects of the various examples of the disclosure, the examples are by no means limiting and are exemplary examples. Many other examples will be apparent to those of skill in the art upon reviewing the above description. The scope of the various examples of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various examples of the disclosure, including the best mode, and also to enable any person skilled in the art to practice the various examples of the disclosure, including making and using any devices or systems and performing any incorporated methods. The patentable scope of the various examples of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A method (300) comprising:
obtaining turbulence datapoints (202, 204, 206) indicative of at least locations and turbulence measurements obtained during one or more aircraft flights;
identifying increases or decreases between the turbulence measurements in the turbulence datapoints (202, 204, 206); and
visually presenting the turbulence datapoints (202, 204, 206) and at least one connection (208) between the turbulence datapoints (202, 204, 206), the turbulence datapoints (202, 204, 206) displayed to visually indicate and differentiate between the turbulence measurements, the connections (208) displayed to visually indicate turbulence between the locations of the turbulence measurements.

2. The method (300) of claim 1, wherein the one or more aircraft flights includes multiple aircraft flights, and multiple sets of the turbulence datapoints (202, 204, 206) are obtained with each of the sets associated with a different one of the aircraft flights.

3. The method (300) of claim 1 or 2, wherein the at least one connection (208) is visually presented as connecting a first measured of the turbulence measurements during a first aircraft flight of the one or more aircraft flights and a last measured of the turbulence measurements during the first aircraft flight.

4. The method (300) of any one of claims 1 to 3, further comprising:
visually displaying one or more segments (210) within the at least one connection (208), each of the one or more segments (210) visually connecting a pair of the turbulence measurements within the at least one connection (208).

5. The method (300) of claim 4, wherein each of the one or more segments (210) is visually presented to represent the turbulence measurement in the pair that was measured before the turbulence measurement in the pair that was measured later.

6. The method (300) of claim 5, wherein each of the one or more segments (210) is visually presented in a same color as the turbulence measurement in the pair that was measured before the turbulence measurement in the pair that was measured later to visually indicate turbulence in airspace between the turbulence measurements in the pair.

7. The method (300) of any one of claims 1 to 6, wherein the at least one connection (208) is presented in one or more colors to visually represent turbulence in airspace between the turbulence datapoints (202, 204, 206).

8. The method (300) of any one of claims 1 to 7, wherein the turbulence datapoints (202, 204, 206) are visually presented as sparse representations of the turbulence measurements and the at least one connection is visually presented to represent turbulence in airspace between the sparse representations.

9. The method (300) of any one of claims 1 to 8, further comprising:
automatically changing a flight path of an aircraft (104) to avoid turbulence between two or more of the turbulence datapoints (202, 204, 206).

10. A turbulence detection and presentation system (100) comprising:
a control unit (102) configured to:
obtain turbulence datapoints (202, 204, 206) indicative of at least locations and turbulence measurements obtained during one or more aircraft flights;
identify increases or decreases between the turbulence measurements in the turbulence datapoints (202, 204, 206);
direct an output device (110) to present the turbulence datapoints (202, 204, 206) and at least one connection (208) between the turbulence datapoints (202, 204, 206), the turbulence datapoints (202, 204, 206) displayed to visually indicate and differentiate between the turbulence measurements, the connections (208) displayed to visually indicate turbulence between the locations of the turbulence measurements.

11. The turbulence detection and presentation system (100) of claim 10, wherein the one or more aircraft flights includes multiple aircraft flights, and the control unit (102) is configured to obtain multiple sets of the turbulence datapoints (202, 204, 206) with each of the sets associated with a different one of the aircraft flights.

12. The turbulence detection and presentation system (100) of claim 10 or 11, wherein the control unit (102) is configured to direct the output device (110) to visually present the at least one connection (208) as connecting a first measured of the turbulence measurements during a first aircraft flight of the one or more aircraft flights and a last measured of the turbulence measurements during the first aircraft flight.

13. The turbulence detection and presentation system (100) of any one of claims 10 to 12, wherein the control unit (102) is configured to direct the output device (110) to visually display one or more segments (210) within the at least one connection (208), each of the one or more segments (210) visually connecting a pair of the turbulence measurements within the at least one connection (208).

14. The turbulence detection and presentation system (100) of claim 13, wherein the control unit (102) is configured to direct the output device (110) to visually present each of the one or more segments (210) to represent the turbulence measurement in the pair that was measured before the turbulence measurement in the pair that was measured later.

15. The turbulence detection and presentation system (100) of any one of claims 10 to 14, wherein the control unit (102) is configured to direct a flight control system (116) to automatically change a flight path of an aircraft (104) to avoid turbulence between two or more of the turbulence datapoints (202, 204, 206).
